# DEMANDE DE BREVET EUROPEEN

(11) **EP 3 422 075 A1**
(43) Date de publication de la demande: **02.01.2019**
(21) Numéro de dépôt: 18180005.3
(22) Date de dépôt: 27.06.2018
(51) Int. Cl.: G02B 26/00, H04N 9/31, G03B 21/20, F21V 9/30

(54) **PROJECTEUR COULEUR À ROUE DE COLORATION PAR CONVERSION SPECTRALE**

(30) Priorité: 29.06.2017 FR 1756048
(71) Demandeur: COMMISSARIAT À L'ÉNERGIE ATOMIQUE ET AUX ÉNERGIES ALTERNATIVES, 75015 Paris (FR); THALES, 92400 Courbevoie (FR)
(72) Inventeur: TEMPLIER, François, 38054 GRENOBLE CEDEX 9 (FR); LUC, François-Henri, 92098 PARIS LA DEFENSE (FR)
(74) Mandataire: Brevalex

(57) **Abrégé**

L'invention concerne un système (400) de projection d'images, configuré pour mettre en oeuvre une projection en couleurs de type séquentiel.

Le système (400) selon l'invention comprend :
- un dispositif matriciel d'affichage émissif (410) ; et
- une roue de coloration (420) par conversion de longueur d'onde.

Selon l'invention, la roue de coloration comporte une zone transparente (4201), et une première zone photoluminescente (4202) configurée pour absorber un faisceau lumineux bleu (430) et émettre en réponse un faisceau (440) comprenant une composante verte et une composante rouge.

Système (400) comprend en outre des moyens de sélection (470) pour bloquer alternativement la composante verte ou la composante rouge, comprenant au moins un miroir dichroïque (4711, 4712).

## Description

### DOMAINE TECHNIQUE

Une image en couleurs peut être décomposée en plusieurs sous images, chacune d'une seule couleur, nommées composantes monochromatiques.

Une image en couleurs est décomposée de préférence en trois sous images.

L'invention concerne le domaine des systèmes de projection d'images en couleurs, en particulier les systèmes de projection vidéo en couleurs.

Ces systèmes de projection réalisent la projection d'une image en couleurs, par projection séparée de chacune des composantes monochromatiques de cette image. Les projections sont dites séparées, car elles sont séparées dans le temps ou dans l'espace.

### ÉTAT DE LA TECHNIQUE ANTÉRIEURE

On connaît dans l'art antérieur différents types de projecteurs, en particulier des projecteurs configurés pour mettre en oeuvre une projection en couleurs de type séquentiel.

Il s'agit de projecteurs configurés pour projeter tour à tour les différentes composantes monochromatiques d'une image en couleurs (polychromatique).

Ces différentes composantes monochromatiques correspondent de préférence à chacune des trois couleurs primaires en synthèses additives : le rouge, le vert et le bleu.

Dans la suite, un tel projecteur est simplement nommé « projecteur de type séquentiel ».

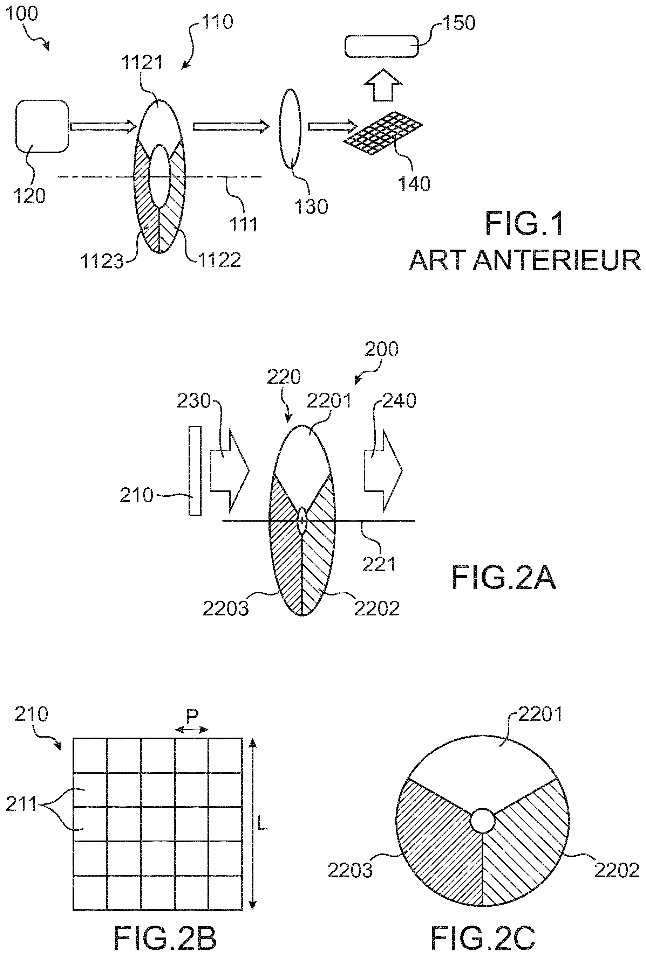

La figure 1 illustre de façon schématique un mode de réalisation connu d'un projecteur 100 de type séquentiel.

Le fonctionnement du projecteur 100 est basé sur l'utilisation d'une roue de coloration 110 à filtres.

La roue de coloration 110 est un disque monté rotatif autour d'un axe de rotation 111. La surface du disque est occupée par trois filtres spectraux en transmission 1121, 1122, 1123, transmettant respectivement le bleu, le rouge et le vert.

Le projecteur 100 comprend :
- une source 120 de lumière blanche ;
- la roue de coloration 110, disposée sur le chemin optique du faisceau lumineux émis par la source 120 de lumière blanche ;
- une lentille relais 130, pour collimater le faisceau lumineux émis par la source 120 de lumière blanche, pouvant également se situer en amont de la roue de coloration 110 ;
- un micro-écran réflectif 140, en particulier une matrice de micro-miroirs dite DMD (pour l'anglais « *Digital Micromirror Device* »), dans laquelle chaque micro-miroir peut prendre deux positions pour réfléchir un rayon lumineux dans l'une ou l'autre direction ; et
- un système optique 150 de projection, pour former une image agrandie du micro-écran réflectif 140, en un plan déterminé.

En fonctionnement, la source 120 de lumière blanche émet un signal continu et d'amplitude constante.

La roue de coloration 110 tourne sur elle-même pour prendre successivement une première, une deuxième puis une troisième positions.

Dans la première position, le faisceau lumineux émis par la source 120 traverse la roue de coloration 110 au niveau d'un premier filtre spectral 1121, transmettant le bleu uniquement.

Dans la deuxième position, le faisceau lumineux émis par la source 120 traverse la roue de coloration 110 au niveau d'un deuxième filtre spectral 1122, transmettant le rouge uniquement.

Dans la troisième position, le faisceau lumineux émis par la source 120 traverse la roue de coloration 110 au niveau d'un troisième filtre spectral 1123, transmettant le vert uniquement.

Le faisceau lumineux en sortie de l'un de ces filtres spectraux traverse la lentille relais 130, et arrive sur le micro-écran réflectif 140.

Le micro-écran réflectif 140 reçoit un signal sensiblement uniforme dans l'espace. Chaque micro-miroir du micro-écran réflectif 140 reçoit une portion de ce signal, et peut pivoter entre une position dans laquelle ladite portion de signal est renvoyée vers le système optique de projection 150, et une position dans laquelle ladite portion de signal est renvoyée vers une autre direction. A partir de ces deux positions, on peut former différents niveaux de gris, en faisant varier une proportion de durée durant laquelle le signal est renvoyé vers le système optique de projection 150.

Ainsi, le micro-écran réflectif 140 transforme un faisceau lumineux représentatif d'une image uniforme, en un faisceau lumineux représentatif d'une image pixellisée, et en niveaux de gris.

Le micro-écran réflectif 140 forme successivement différentes images pixellisées, en niveaux de gris.

La fréquence de succession des positions de la roue de coloration 110, et la fréquence de succession des images formées par le micro-écran réflectif 140, sont synchronisées ensemble.

Ainsi, le micro-écran réflectif renvoie tour à tour, vers le système optique de projection 150, une image bleue, verte puis rouge, et ainsi de suite.

En renvoyant tour à tour, vers le système optique de projection 150, les composantes bleue, verte et rouge d'une même image en couleurs, le projecteur 100 réalise une projection d'image en couleurs, de type séquentiel.

Un inconvénient de ce mode de réalisation est cependant son encombrement.

En outre, les filtres spectraux composant la roue de coloration 110 présentent chacun un coefficient de transmission d'environ 30%, ce qui limite grandement le rendement énergétique du projecteur 100.

Un objectif de la présente invention est de proposer un projecteur d'images en couleurs, qui présente un encombrement réduit.

Un autre but de la présente invention est de proposer un projecteur d'images en couleurs, qui offre un bon rendement énergétique.

### EXPOSÉ DE L'INVENTION

Cet objectif est atteint avec un système de projection d'images, configuré pour mettre en oeuvre une projection en couleurs de type séquentiel, et qui comprend :
- un dispositif matriciel d'affichage émissif ; et
- une roue de coloration par conversion de longueur d'onde, comportant au moins deux zones associées chacune à une valeur respective d'une différence de longueur d'onde, entre une longueur d'onde d'entrée sur la roue, λ₁, et une longueur d'onde de sortie de la roue, λ₂, avec λ₂≥ λ₁.

L'invention propose donc de remplacer le principe de sélection de couleur par filtrage de longueurs d'onde, par une sélection de couleur par conversion de longueur d'onde.

La conversion de longueur d'onde est réalisée en pratique par un élément photoluminescent, présent dans l'une au moins desdites zones de la roue de coloration par conversion de longueur d'onde.

L'une des zones de la roue de coloration peut être transparente, sans élément photoluminescent, ce qui correspond à une différence nulle entre λ₁ et λ₂.

Une roue de coloration par filtrage spectral ne fait que bloquer ou transmettre des photons, en fonction de leur longueur d'onde. Par conséquent, toutes les longueurs d'onde que l'on souhaite avoir, à un moment ou à un autre, en sortie de la roue de coloration, doivent être présentes en entrée de la roue, et seules certaines d'entre elles se retrouvent en sortie de la roue, à chaque instant.

Ici, la roue de coloration est basée plutôt sur une conversion de longueur d'onde.

Le phénomène de conversion de longueur d'onde correspond à l'absorption de photons à une première longueur d'onde, émis par le dispositif matriciel d'affichage émissif, et l'émission, en réponse, de photons à une seconde longueur d'onde strictement supérieure à la première longueur d'onde.

Par conséquent, toutes les longueurs d'onde que l'on souhaite avoir, à un moment ou à un autre, en sortie de la roue de coloration selon l'invention, n'ont pas à être présentes en entrée de ladite roue. Il suffit que les différentes zones de la roue de coloration selon l'invention, et les différences de longueur d'onde associées à ces zones, soient adaptées pour obtenir les longueurs d'onde voulues en sortie de la roue.

Par conséquent, le rendement énergétique associé à la roue de conversion selon l'invention permet d'obtenir de bien meilleurs rendements énergétiques qu'une roue de coloration à filtres spectraux.

L'invention permet donc d'obtenir un projecteur d'images en couleurs, qui offre un bon rendement énergétique.

L'invention propose également de remplacer une source lumineuse, et un élément matriciel de formation d'une image, distincts l'un de l'autre, par un dispositif matriciel d'affichage émissif réalisant à la fois les fonctions d'émission lumineuse et de formation d'image.

La conversion de longueur d'onde est donc réalisée directement sur une image, émise par le dispositif matriciel d'affichage émissif.

La conversion en longueur d'onde étant un phénomène qui ne permet d'obtenir que des longueurs d'onde supérieures à la longueur d'onde absorbée, le dispositif matriciel d'affichage émissif est avantageusement adapté à émettre à des longueurs d'onde situées dans la partie basse du spectre visible, ou même inférieures.

L'invention permet ainsi d'obtenir un projecteur d'images en couleurs, compact, présentant un encombrement réduit.

L'invention utilise un même dispositif matriciel d'affichage pour l'affichage des différentes composantes monochromatiques d'une même image en couleurs. Elle offre donc un faible coût de fabrication.

Enfin, la solution proposée ici reste dans le cadre d'une projection de type séquentiel, alors qu'une solution évidente aurait consisté à utiliser un dispositif d'affichage émissif trichrome, constitué d'une matrice de macro-pixels, chaque macro-pixel étant constitué d'au moins un pixel bleu, un pixel vert et un pixel rouge. La projection de type séquentiel donne accès à de plus hautes résolutions d'affichage. En outre, tous les pixels du dispositif matriciel d'affichage émissif peuvent présenter le même spectre d'émission, ce qui simplifie sa fabrication.

La roue de coloration est disposée en aval du dispositif matriciel d'affichage émissif, relativement au sens de propagation de la lumière émise par ledit dispositif matriciel d'affichage émissif.

En fonctionnement, le dispositif matriciel d'affichage émissif projette successivement différentes images monochromatiques, en direction de la roue de coloration par conversion de longueur d'onde.

Ces images sont avantageusement des images en niveaux de gris, chaque niveau de gris correspondant à une valeur prédéterminée de luminance.

La roue de coloration reçoit les rayons lumineux émis grâce au dispositif matriciel d'affichage émissif, et prend successivement différentes positions.

Chaque position correspond à l'incidence de ces rayons lumineux sur l'une ou l'autre des zones de la roue de coloration, chaque zone étant associée à une valeur différente d'un saut de longueur d'onde entre une longueur d'onde incidente sur la roue, λ₁, et une longueur d'onde émergeant en sortie de la roue, λ₂.

Ainsi, la roue de coloration convertit une première succession d'images qui présentent toutes le même spectre en longueur d'onde, en une seconde succession d'images qui ne présentent pas toutes le même spectre en longueur d'onde.

On peut ainsi réaliser une projection d'images en couleurs de type séquentiel, par projection tour à tour, pour chaque image en couleurs, de ses différentes composantes spectrales.

De préférence, la roue de coloration est agencée pour recevoir un faisceau lumineux provenant du dispositif matriciel d'affichage émissif, et le dispositif matriciel d'affichage émissif est configuré pour émettre un faisceau lumineux avec un pic d'émission centré sur ladite d'onde d'entrée sur la roue, λ₁.

Le dispositif matriciel d'affichage émissif est avantageusement configuré pour émettre un faisceau lumineux avec un pic d'émission centré sur une longueur d'onde inférieure à 500 nm.

L'une au moins desdites zones comprend de préférence un élément photoluminescent comportant des nano-cristaux.

La roue de coloration comporte avantageusement :
- une zone transparente, associée à une valeur nulle de la différence entre une longueur d'onde d'entrée sur la roue et une longueur d'onde de sortie de la roue ; et
- au moins une zone photoluminescente, associée à une valeur non nulle de la différence entre une longueur d'onde d'entrée sur la roue et une longueur d'onde de sortie de la roue.

En particulier, la roue de coloration peut comporter :
- une zone transparente, associée à une valeur nulle de la différence entre une longueur d'onde d'entrée sur la roue et une longueur d'onde de sortie de la roue ;
- une première zone photoluminescente, configurée pour absorber un faisceau lumineux incident de couleur bleue et émettre en réponse un faisceau lumineux de couleur verte ; et
- une seconde zone photoluminescente, configurée pour absorber un faisceau lumineux incident de couleur bleue et émettre en réponse un faisceau lumineux de couleur rouge.

En variante, la roue de coloration peut comporter :
- une zone transparente, associée à une valeur nulle de la différence entre une longueur d'onde d'entrée sur la roue et une longueur d'onde de sortie de la roue ;
- une première zone photoluminescente, configurée pour absorber un faisceau lumineux incident de couleur bleue et émettre en réponse un faisceau lumineux comprenant une composante verte et une composante rouge ;
le système comprenant en outre des moyens de sélection, configurés pour bloquer alternativement la composante verte ou la composante rouge, et comprenant au moins un miroir dichroïque.

De préférence, le dispositif matriciel d'affichage émissif est configuré pour émettre une image monochromatique de couleur bleue.

Le dispositif matriciel d'affichage émissif peut comporter une matrice de diodes électroluminescentes.

En particulier, le dispositif matriciel d'affichage émissif peut comporter une matrice de diodes électroluminescentes à base de nitrure de gallium.

Les pixels du dispositif matriciel d'affichage émissif sont avantageusement répartis selon une matrice carrée ou rectangulaire de côté(s) compris entre 5 mm et 20 mm.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- la figure 1 illustre de manière schématique, un projecteur d'images en couleurs de type séquentiel, selon l'art antérieur ;
- les figures 2A à 2C illustrent de manière schématique un premier mode de réalisation d'un système de projection d'images selon l'invention ;
- la figure 3 illustre plus particulièrement des moyens pour réaliser la projection de type séquentiel, dans un système de projection d'images selon l'invention ; et
- la figure 4 illustre de manière schématique un deuxième mode de réalisation d'un système de projection d'images selon l'invention.

### EXPOSÉ DÉTAILLÉ DE MODES DE RÉALISATION PARTICULIERS

La figure 2A illustre de façon schématique un premier mode de réalisation d'un système 200 de projection d'images, selon l'invention.

Le système 200 comprend :
- un dispositif matriciel 210 d'affichage émissif (voir figure 2B) ; et
- une roue de coloration 220 par conversion de longueur d'onde (voir figure 2C).

Le spectre d'émission du dispositif matriciel 210 d'affichage émissif présente un pic d'émission, dit pic principal, centré sur une longueur d'onde située dans le spectre visible (entre 400 nm et 800 nm) ou proche ultra-violet (environ de 300 nm à 400 nm).

Ici, le dispositif matriciel 210 d'affichage émissif présente plus particulièrement un spectre d'émission avec un pic d'émission dans le bleu, c'est-à-dire centré sur une longueur d'onde comprise entre 440 nm et 500 nm.

Le cas échéant, ce spectre d'émission peut présenter des pics supplémentaires, non exploités par le système de projection d'images, situés en dehors du spectre visible et du proche ultra-violet, par exemple situés dans l'infrarouge.

En tout état de cause, on considère dans la suite que le dispositif matriciel d'affichage émissif fournit une émission monochromatique associée au pic principal, ici une émission monochromatique dans le bleu.

Les pixels du dispositif matriciel 210 d'affichage émissif sont répartis selon une matrice carrée (ou rectangulaire), de côté(s) L (respectivement L1, L2 pour une matrice rectangulaire) compris ici entre 5 mm et 20 mm.

Le pas de pixel P est ici inférieur à 10 µm, par exemple égal à 5 µm.

Le dispositif matriciel 210 d'affichage émissif forme donc un micro-écran.

Il est représenté à la figure 2B, selon une vue de face.

Le dispositif matriciel 210 d'affichage émissif est adapté à fournir un éclairement de très forte intensité lumineuse, par exemple plus de 10³ Cd/m², et même jusqu'à 10⁷ Cd/m².

Chaque pixel est constitué ici d'une diode électroluminescente 211, et plus particulièrement une diode électroluminescente à base de nitrure de gallium (GaN), ici une diode électroluminescente en nitrure de gallium-indium (InGaN).

Les diodes électroluminescentes 211 peuvent être nommées micro-LED, du fait de leurs dimensions de l'ordre du micromètre (pas de répartition inférieur ici à 10 µm).

Chaque diode électroluminescente 211 est reliée à une source de courant électrique, respectivement de tension électrique, non représentée. L'intensité lumineuse du signal émis par la diode électroluminescente 211 est fonction de son courant, respectivement sa tension d'alimentation. Par exemple, cette intensité lumineuse du signal émis par la diode électroluminescente 211 dépend directement de l'amplitude de son courant, respectivement sa tension d'alimentation.

Ainsi, la matrice de diodes électroluminescentes est adaptée à afficher une image monochromatique de couleur bleue, pixellisée, et en niveaux de gris. Chaque pixel correspond à l'une des diodes électroluminescentes 211, et la valeur du niveau de gris associée à un pixel correspond à la luminance de la diode électroluminescente 211 correspondante.

Dans la suite, on considère que ce niveau de gris correspond également à l'intensité lumineuse du faisceau émis par ladite diode électroluminescente correspondante.

Le signal lumineux 230 émis par la matrice de diodes électroluminescentes, et associé à cette image de couleur bleue, se propage jusqu'à la roue de coloration 220, située sur le chemin optique de ce signal 230.

La roue de coloration 220 est un disque, monté rotatif autour d'un axe de rotation 221. L'axe de rotation 221 s'étend orthogonal au plan du disque, en passant par le centre du disque.

Elle est représentée en figure 2C, selon une vue de face.

La surface du disque est occupée par trois zones 2201, 2202, 2203.

L'axe de rotation 221 est parallèle à un axe central de propagation du signal lumineux 230 émis par la matrice de diodes électroluminescentes, mais décalé relativement à cet axe, de sorte que l'une ou l'autre zone 2201, 2202, 2203 soit traversée par ce signal lumineux, en fonction d'un angle de rotation de la roue de coloration 220 autour de l'axe 221.

Ici, les trois zones 2201, 2202, 2203 présentent toutes les mêmes dimensions.

Elles s'étendent chacune selon une portion de disque définie par un arc de cercle de 120°.

La deuxième zone 2202 est décalée de 120° relativement à la première zone 2201, autour de l'axe de rotation 221.

La troisième zone 2203 est décalée de 240° relativement à la première zone 2201, autour de l'axe de rotation 221.

La première zone 2201 est ici une simple plaque transparente dans le visible, voire même une ouverture traversante dans la surface du disque.

La deuxième zone 2202 est une zone photoluminescente.

De la même manière, la troisième zone 2203 est une zone photoluminescente.

La zone 2202, respectivement 2203, est dite photoluminescente, en ce qu'elle comprend un élément photoluminescent, c'est-à-dire adapté à absorber des photons à une première longueur d'onde puis, en réaction à cette absorption de photons, à émettre des photons à une seconde longueur d'onde distincte de la première longueur d'onde.

L'élément photoluminescent comprend par exemple un matériau semiconducteur à multi-puits quantiques, ou un matériau comportant des nano-cristaux semi-conducteurs de type « quantum dot », ou un matériau inorganique à base de phosphore, ou un colorant organique, etc.

L'élément photoluminescent peut notamment être en grenat d'yttrium et d'aluminium (YAG, sigle anglais pour Yttrium Aluminium Garnet) activé par l'ion cérium trivalent, également appelé YAG:Ce ou YAG:Ce3+.

Lorsque l'élément photoluminescent comporte des nano-cristaux, ces derniers peuvent comprendre au moins un matériau choisi dans le groupe comportant le séléniure de cadmium, le phosphure d'indium, le sulfure de cadmium, le sulfure de zinc, le séléniure de zinc, le tellurure de cadmium, le tellurure de zinc, l'oxyde de cadmium, l'oxyde de zinc et de cadmium, le sulfure de zinc et de cadmium, le séléniure de zinc et de cadmium, le sulfure d'argent et d'indium et un mélange d'au moins deux de ces composés.

Ces nano-cristaux sont des nano-cristaux de semi-conducteurs, dont l'une au moins des dimensions est inférieure à 100 nm. Du fait de leurs petites dimensions, ces nano-cristaux se comportent comme des puits de potentiel, comparables aux puits quantiques.

Lorsque l'élément photoluminescent comprend un matériau semiconducteur à multi-puits quantiques, cet élément peut être formé d'une couche semi-conductrice constituée de couches à puits quantiques disposées entre des couches barrières, les couches barrières étant par exemple à base de GaN, AIP ou AlInP, et les puits étant à base de GaN, d'InN, d'InGaN, d'AlGaN, d'AlN, d'AlInGaN, et/ou GaP.

La zone 2202, respectivement 2203, permet de réaliser ainsi une conversion de longueur d'onde, en ce qu'elle absorbe un faisceau incident dont le spectre est centré sur une première longueur d'onde, et émet en réponse un faisceau, dit faisceau de sortie, dont le spectre est centré sur une seconde longueur d'onde distincte de la première longueur d'onde.

Ici, la deuxième zone 2202 permet plus particulièrement de convertir le signal lumineux 230 émis par la matrice de diodes électroluminescentes, et incident sur la roue de coloration 220, en un faisceau de sortie 240 de couleur rouge.

L'élément photoluminescent qui s'étend dans la zone 2202 comprend alors, par exemple, des nano-cristaux avec un coeur en CdSe (séléniure de cadmium) et une coquille en ZnS (sulfure de zinc).

De manière similaire, la troisième zone 2203 permet plus particulièrement de convertir le signal lumineux 230 émis par la matrice de diodes électroluminescentes, et incident sur la roue de coloration 220, en un faisceau de sortie 240 de couleur verte.

L'élément photoluminescent qui s'étend dans la zone 2203 comprend alors, par exemple, des nano-cristaux avec un coeur en CdSe et une coquille en ZnS (avec des diamètres différents de ceux des nano-cristaux de la deuxième zone 2202).

Un faisceau de couleur bleue désigne ici un faisceau dont le spectre lumineux présente un pic d'amplitude centré sur une longueur d'onde comprise entre 440 nm et 500 nm.

Un faisceau de couleur rouge désigne ici un faisceau dont le spectre lumineux présente un pic d'amplitude centré sur une longueur d'onde comprise entre 600 nm et 750 nm.

Un faisceau de couleur verte désigne ici un faisceau dont le spectre lumineux présente un pic d'amplitude centré sur une longueur d'onde comprise entre 510 nm et 570 nm.

Le phénomène de photoluminescence réalise une émission de photons à une longueur d'onde supérieure à celle des photons absorbés. Il est donc avantageux que le dispositif matriciel 210 d'affichage émissif présente un spectre d'émission avec un pic d'émission dans les basses longueurs d'onde. Ici, ce pic d'émission est dans le bleu, ce qui permet de réduire un nombre d'éléments photoluminescents dans la roue de coloration.

Le faisceau de sortie 240 émis par la zone 2202, respectivement 2203, se propage ensuite en s'éloignant de la roue de coloration 220 et de la matrice de diodes électroluminescentes.

Bien que le faisceau lumineux 230 soit en réalité absorbé par la zone 2202, respectivement 2203, tout se passe donc comme si ce faisceau traversait ladite zone 2202, respectivement 2203, et en ressortait avec une longueur d'onde modifiée.

La roue de coloration 220 est configurée pour tourner sur elle-même de façon à prendre tour à tour trois positions :
- une première position dans laquelle l'intersection du signal lumineux 230 émis par la matrice de diodes électroluminescentes, avec la roue de coloration 220, s'étend entièrement sur la première zone 2201 ;
- une deuxième position dans laquelle l'intersection du signal lumineux 230 émis par la matrice de diodes électroluminescentes, avec la roue de coloration 220, s'étend entièrement sur la deuxième zone 2202 ; et
- une troisième position dans laquelle l'intersection du signal lumineux 230 émis par la matrice de diodes électroluminescentes, avec la roue de coloration 220, s'étend entièrement sur la troisième zone 2203.

Dans la première position, le signal lumineux 230 émis par la matrice de diodes électroluminescentes traverse la roue de coloration 220 sans être absorbé ni converti, puis se propage en s'éloignant de la roue de coloration 220 et de la matrice de diodes électroluminescentes. Le faisceau de sortie 240, émergeant de la roue de coloration 220, présente donc le même spectre que le signal lumineux 230 émis par la matrice de diodes électroluminescentes.

Le faisceau de sortie 240 correspond alors à une image en niveaux de gris, de couleur bleue.

Dans la deuxième position, le faisceau de sortie 240, émergeant de la roue de coloration 220 correspond au signal lumineux 230 émis par la matrice de diodes électroluminescentes, et converti en longueur d'onde. La conversion de longueur d'onde réalise une absorption dans le bleu et une émission dans le rouge.

Le faisceau de sortie 240 correspond alors à une image en niveaux de gris, de couleur rouge.

Dans la troisième position, le faisceau de sortie 240, émergeant de la roue de coloration 220 correspond au signal lumineux 230 émis par la matrice de diodes électroluminescentes, et converti en longueur d'onde. La conversion de longueur d'onde réalise une absorption dans le bleu et une émission dans le vert.

Le faisceau de sortie 240 correspond alors à une image en niveaux de gris, de couleur verte.

Dans chacune de ces positions :
- le signal lumineux 230, incident sur la roue de coloration 220, forme un signal d'entrée sur la roue, présentant un spectre avec un pic d'émission centré sur une première longueur d'onde, λ₁, dite longueur d'onde d'entrée (ici la longueur d'onde d'émission des diodes électroluminescentes 211) ; et
- le faisceau de sortie 240, émergeant de la roue de coloration 220, forme un signal de sortie, présentant un spectre avec un pic centré sur une seconde longueur d'onde, λ₂, dite longueur d'onde de sortie (égale à la longueur d'onde d'entrée lorsque la roue de coloration se trouve dans sa première position, supérieure sinon).

Ainsi, la roue de coloration 220 est adaptée à convertir une première succession d'images qui présentent toutes le même spectre en longueur d'onde, en une seconde succession d'images qui ne présentent pas toutes le même spectre en longueur d'onde. En particulier, la première succession d'images comprend uniquement des images en bleu, tandis que la seconde succession d'images comprend des images en bleu, des images en rouge et des images en vert.

Le système 200 de projection d'images, selon l'invention, est configuré pour mettre en oeuvre une projection d'images en couleurs, de type séquentiel.

En d'autres termes, il est configuré pour que le faisceau de sortie 240 corresponde tour à tour aux composantes bleue, rouge puis verte d'une même image en couleurs.

Ce mode de réalisation est particulièrement compact, et peut en particulier ne comporter aucun miroir dichroïque.

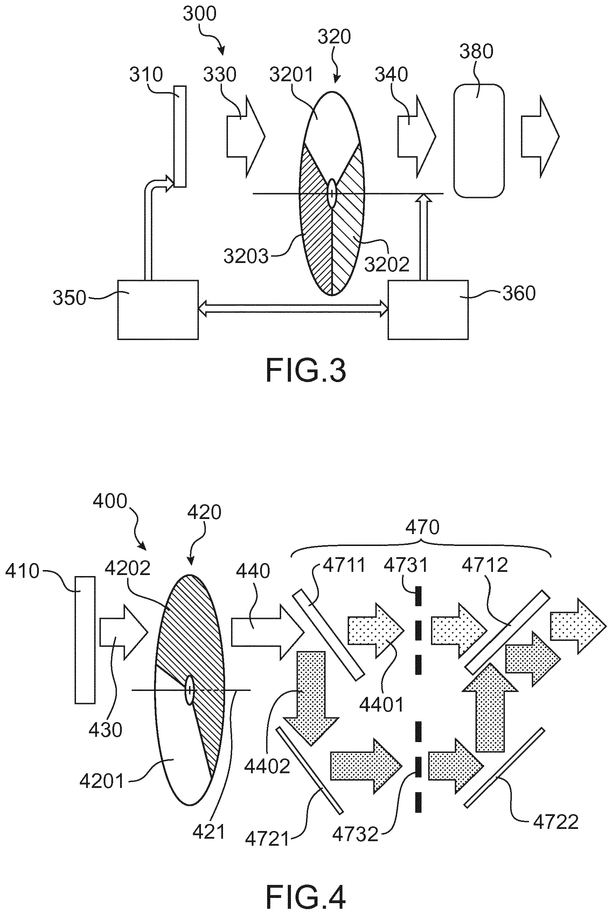

La figure 3 illustre plus en détail des moyens mis en oeuvre pour réaliser une projection d'images en couleurs de type séquentiel.

La figure 3 ne sera donc décrite que pour ses différences relativement à la figure 2A.

Ici, on a représenté un système 300 de projection d'images.

Le système 300 de projection d'images comprend :
- un dispositif matriciel 310 d'affichage émissif, tel que décrit en référence aux figures 2A et 2B, configuré pour émettre un signal lumineux 330; et
- une roue de coloration 320, comportant trois zones 3201, 3202, 3203 telles que décrites en référence aux figures 2A et 2C, et de laquelle émerge le faisceau de sortie 340.

Le système 300 de projection d'images comprend également :
- des moyens de pilotage 350, configurés pour piloter l'affichage successif d'une pluralité d'images par le dispositif matriciel 310 d'affichage émissif, ici des images monochromatiques de couleur bleue ; et
- un moteur 360, configuré pour entraîner en rotation la roue de coloration 320, et pour la positionner successivement dans l'une parmi les plusieurs positions décrites ci-avant, une fréquence de succession des positions prises par la roue de coloration étant synchronisée avec une fréquence de succession des images affichées par le dispositif matriciel d'affichage émissif.

Les positions de la roue de coloration correspondent chacune à une position dans laquelle l'intersection du signal lumineux 330 émis par la matrice de diodes électroluminescentes, avec la roue de coloration 320, s'étend entièrement sur la première zone 3201, respectivement deuxième zone 3202, respectivement troisième zone 3203.

Les différentes composantes chromatiques d'une même image en couleurs peuvent se succéder dans un ordre ou dans un autre.

Les différentes composantes chromatiques se succèdent en particulier selon une fréquence *f* de N composantes par seconde, correspondant à un défilement d'images en couleurs à une fréquence de 3*N images par seconde.

La valeur de N est généralement égale à 50. Il peut être avantageux pour la qualité d'image (notamment diminuer le papillotement) d'augmenter cette valeur de N, à 100 ou 200. L'invention permet d'avoir accès à de telles valeurs de N, grâce à l'utilisation d'une matrice de LED, présentant un temps de réponse très rapide. De telles valeurs ne sont pas atteignables avec des systèmes selon l'art antérieur basés sur l'utilisation de micro-écrans tels que des micro-écrans LCD.

Les moyens de pilotage 350 et le moteur 360, synchronisés ensemble, ne seront pas décrits ici plus en détail. En effet, leurs détails de mise en oeuvre ne présentent pas de difficulté pour l'homme du métier, spécialiste de l'affichage en couleurs de type séquentiel.

En particulier, la synchronisation mise en oeuvre entre la rotation de la roue de coloration 320 et l'affichage des images par le dispositif matriciel 310 d'affichage émissif, est similaire à la synchronisation mise en oeuvre, dans l'art antérieur, entre une roue de coloration à filtres et un affichage d'images par un micro-écran réflectif ou transmissif (voir figure 1).

A la figure 3, on a également représenté un système optique de projection 380, comprenant au moins une optique réfractive, et configuré pour former une image de la matrice de diodes électroluminescentes en un plan de focalisation prédéterminée (ladite image étant bleue, rouge ou verte).

La figure 4 illustre de manière schématique un deuxième mode de réalisation d'un système 400 de projection d'images selon l'invention.

Le mode de réalisation de la figure 4 ne sera décrit que pour ses différences relativement au mode de réalisation des figures 2A à 2C.

La roue de coloration 420 par conversion de longueur d'onde comporte ici uniquement deux zones 4201, 4202.

Ici, les deux zones 4201, 4202 ne présentent pas les mêmes dimensions.

La zone 4201 s'étend sur une portion de disque définie par un arc de cercle de 120° autour de l'axe de rotation de la roue 420, tandis que la zone 4202 s'étend sur une portion de disque définie par un arc de cercle de 240° autour du même axe, les deux zones 4201 et 4202 s'étendant ensemble sur 360° autour de ce même axe.

La première zone 4201 est ici une simple plaque transparente dans le visible, voire même une ouverture traversante dans la roue de coloration 420.

La deuxième zone 4202 est une zone photoluminescente.

Elle permet de convertir le signal lumineux 430 émis par le dispositif matriciel 410 d'affichage émissif, et incident sur la roue de coloration 420, en un faisceau de sortie 440 présentant un spectre avec deux pics, l'un correspondant à une émission dans le vert, et l'autre à une émission dans le rouge.

En particulier, le faisceau de sortie 440 présente un spectre avec un pic d'amplitude centré sur une longueur d'onde comprise entre 600 nm et 750 nm, et un pic d'amplitude centré sur une longueur d'onde comprise entre 510 nm et 570 nm.

L'élément photoluminescent qui s'étend dans la zone 4202 comprend par exemple deux types de nano-cristaux, chacun avec un coeur en CdSe et une coquille en ZnS, et qui diffèrent par leurs diamètres.

La roue de coloration 420 est configurée pour tourner sur elle-même de façon à prendre tour à tour deux positions :
- une première position dans laquelle l'intersection du signal lumineux 430 émis par le dispositif matriciel 410 d'affichage émissif, avec la roue de coloration 420, s'étend entièrement sur la première zone 4201 ;
- une seconde position dans laquelle l'intersection du signal lumineux 430 émis par le dispositif matriciel 410 d'affichage émissif, avec la roue de coloration 420, s'étend entièrement sur la deuxième zone 4202.

Dans la première position, le signal lumineux 430 émis par la matrice de diodes électroluminescentes traverse la roue de coloration 420 sans être absorbé, puis se propage en s'éloignant de la roue de coloration 420 et de la matrice de diodes électroluminescentes. Le faisceau de sortie 440, émergeant de la roue de coloration 420, présente donc le même spectre que le signal lumineux 430 émis par la matrice de diodes électroluminescentes.

Le faisceau de sortie 440 correspond alors à une image en niveaux de gris, de couleur bleue.

Dans la deuxième position, le faisceau de sortie 440, émergeant de la roue de coloration 420 correspond au signal lumineux 430 émis par le dispositif matriciel 410 d'affichage émissif, et converti en longueur d'onde. La conversion de longueur d'onde réalise une absorption dans le bleu et une émission dans le rouge et le vert.

Le faisceau de sortie 440 correspond alors à une image en niveaux de gris, ayant deux composantes chromatiques, l'une rouge, l'autre verte.

A moins que l'une des composantes chromatiques rouge et verte soit nulle, le faisceau de sortie 440 apparaît en jaune, couleur correspondant à une combinaison de rouge et de vert.

Ainsi, la roue de coloration 420 est adaptée à convertir une première succession d'images qui présentent toutes le même spectre en longueur d'onde, en une seconde succession d'images qui ne présentent pas toutes le même spectre en longueur d'onde. En particulier, la première succession d'images comprend uniquement des images en bleu, tandis que la seconde succession d'images comprend des images en bleu, et des images comportant une composante rouge et une composante verte.

Le faisceau de sortie 440 traverse ensuite des moyens 470 de séparation de longueur d'onde.

Ces moyens comprennent ici deux miroirs dichroïques 4711, 4712, deux miroirs simples 4721, 4722, et deux obturateurs mobiles 4731, 4732.

Le faisceau de sortie 440, émergeant de la roue de coloration 420, se propage jusqu'à un premier miroir dichroïque 4711, agencé à 45° relativement à l'axe de propagation dudit faisceau de sortie 440.

Un miroir dichroïque est configuré pour réfléchir ou transmettre des rayons lumineux en fonction de leur longueur d'onde.

Ici, le premier miroir dichroïque 4711 est configuré pour séparer les contributions spectrales verte et rouge d'un faisceau de sortie tel que décrit ci-avant, l'une contribution étant réfléchie, et l'autre transmise.

Par exemple, le premier miroir dichroïque 4711 transmet des rayons lumineux à des longueurs d'onde inférieures à 580 nm, et réfléchit des longueurs d'onde supérieures à 580 nm.

Ainsi, la contribution verte 4401 du faisceau de sortie 440 traverse le premier miroir dichroïque 4711, tandis que la contribution rouge 4402 du faisceau de sortie 440 est réfléchie par le premier miroir dichroïque 4711.

La contribution verte 4401 se propage en ligne droite jusqu'au premier obturateur mobile 4731.

Un obturateur mobile désigne ici une pièce mécanique opaque, mobile entre une position fermée dans laquelle elle bloque un faisceau lumineux provenant de la roue de coloration 420, et une position ouverte dans laquelle elle laisse passer ce faisceau lumineux.

L'obturateur mobile peut comprendre une surface absorbante, pour absorber, en position fermée, ledit faisceau lumineux.

Si le premier obturateur mobile 4731 est en position ouverte, la contribution verte 4401 traverse le premier obturateur mobile 4731 et se propage jusqu'au second miroir dichroïque 4712.

Si le premier obturateur mobile 4731 est en position fermée, la propagation de la contribution verte 4401 est arrêtée.

Le second miroir dichroïque 4712 est identique au premier miroir dichroïque, et agencé à 90° relativement à celui-ci.

Il laisse passer la contribution verte 4401, jusqu'en sortie du système 400 de projection d'images selon l'invention.

De façon similaire, la contribution rouge 4402 est réfléchie à 90° vers un premier puis un second miroirs simples 4721, 4722.

Les premier et second miroirs simples sont agencés à 90° l'un relativement à l'autre, et configurés ensemble pour diriger un faisceau lumineux jusqu'au second miroir dichroïque 4712.

Sur le chemin optique de la contribution rouge 4402, entre les premier et second miroirs dichroïques 4711, 4712, s'étend un second obturateur mobile 4732.

Le second obturateur mobile 4732 est identique au premier obturateur mobile, et s'étend ici entre les premier et second miroirs simples 4721, 4722.

Si le second obturateur mobile 4732 est en position ouverte, la contribution rouge 4402 traverse le second obturateur mobile 4732 et se propage jusqu'au second miroir dichroïque 4712.

Si le second obturateur mobile 4732 est en position fermée, la propagation de la contribution rouge 4402 est arrêtée.

Le second miroir dichroïque 4712 est agencé pour réfléchir la contribution rouge 4402, et la diriger en sortie du système 400 de projection d'images selon l'invention.

Ici, le faisceau bleu, transmis par la première zone 4201 de la roue de coloration, suit le même trajet optique que la contribution verte 4401.

On peut cependant mettre en oeuvre des variantes dans lesquelles ce faisceau bleu suit plutôt le même trajet optique que la contribution rouge 4402.

Le basculement des obturateurs mobiles 4731, 4732 est synchronisé avec la rotation de la roue de coloration 420.

Le système 400 est configuré, en particulier, pour prendre tour à tour trois positions :
- une première position dans laquelle l'intersection du signal lumineux 430 émis par le dispositif matriciel 410 d'affichage émissif, avec la roue de coloration 420, s'étend entièrement sur la première zone 4201, et dans laquelle le premier obturateur mobile 4731 est ouvert (le second obturateur mobile pouvant être ici ouvert ou fermé);
- une deuxième position dans laquelle l'intersection du signal lumineux 430 émis par le dispositif matriciel 410 d'affichage émissif, avec la roue de coloration 420, s'étend entièrement sur la deuxième zone 4202, et dans laquelle le premier obturateur mobile 4731 est ouvert et le second obturateur mobile 4732 est fermé ; et
- une troisième position dans laquelle l'intersection du signal lumineux 430 émis par le dispositif matriciel 410 d'affichage émissif, avec la roue de coloration 420, s'étend entièrement sur la deuxième zone 4202, et dans laquelle le premier obturateur mobile 4731 est fermé et le second obturateur mobile 4732 est ouvert.

Dans la première position, le faisceau émergeant du système 400 est identique au signal lumineux 430 émis par le dispositif matriciel 410 d'affichage émissif. Il s'agit d'un signal correspondant à une image en niveaux de gris, de couleur bleue.

Dans la deuxième position, le faisceau émergeant du système 400 correspond à la contribution verte d'un signal obtenu après conversion de longueur d'onde par la roue de coloration, et à partir du signal lumineux 430 émis par le dispositif matriciel 410 d'affichage émissif. Il s'agit d'un signal correspondant à une image en niveaux de gris, de couleur verte.

Dans la troisième position, le faisceau émergeant du système 400 correspond à la contribution rouge d'un signal obtenu après conversion de longueur d'onde par la roue de coloration, et à partir du signal lumineux 430 émis par le dispositif matriciel 410 d'affichage émissif. Il s'agit d'un signal correspondant à une image en niveaux de gris, de couleur rouge.

Les différents faisceaux pouvant émerger du système 400 se propagent tous selon un même trajet optique, en sortie du système 400.

Le système 400 de projection d'images, selon l'invention, est configuré pour mettre en oeuvre une projection d'images en couleurs, de type séquentiel.

En d'autres termes, il est configuré pour que le faisceau en sortie du système 400 corresponde tour à tour aux composantes bleue, rouge puis verte d'une même image en couleur.

Les moyens précis pour mettre en oeuvre cette projection d'images en couleurs de type séquentiel ne sont pas décrits plus avant ici.

Ils sont basés sur le même principe que ce qui est décrit à propos de la figure 3, la roue de coloration présentant ici la même position pour la projection de la composante rouge et de la composante verte d'une image.

En particulier, une fréquence de succession des images affichées par le dispositif matriciel d'affichage émissif est synchronisée avec une fréquence de succession des positions prises par le système 400, telles que décrites ci-dessus, ces positions impliquant la roue de coloration, le premier obturateur mobile et le second obturateur mobile.

L'invention n'est pas limitée aux exemples décrits ci-dessus, et de nombreuses variantes peuvent être mises en oeuvre sans sortir du cadre de l'invention.

En particulier, on a représenté sur les figures des modes de réalisation, dans lesquels la roue de coloration selon l'invention est configurée pour recevoir un faisceau lumineux provenant directement du dispositif matriciel d'affichage émissif. Le dispositif matriciel d'affichage émissif émet alors un faisceau avec un pic d'émission centrée sur la longueur d'onde d'entrée sur la roue, λ₁. La roue de coloration est disposée en aval du dispositif matriciel d'affichage émissif, directement à la suite de celui-ci. Cependant, l'invention couvre également des variantes dans lesquelles la roue de coloration selon l'invention est configurée pour recevoir un faisceau lumineux provenant indirectement du dispositif matriciel d'affichage émissif. Par exemple, un élément annexe de conversion en longueur d'onde peut être disposé entre le dispositif matriciel d'affichage émissif et la roue de coloration, adapté à convertir un faisceau lumineux émis par le dispositif matriciel d'affichage émissif, en un faisceau lumineux à la longueur d'onde d'entrée sur la roue, λ₁.

Selon d'autres variantes, le dispositif matriciel d'affichage émissif peut être constitué de diodes électroluminescentes autres que des diodes à base de GaN, ou d'une matrice de diodes électroluminescentes organiques (OLED).

L'invention peut également utiliser une autre décomposition spectrale que la décomposition en couleurs primaires rouge, bleu et vert.

La roue de coloration peut ne présenter que des zones photoluminescentes. Dans ce cas, le dispositif matriciel d'affichage émissif est configuré pour émettre un faisceau lumineux avec un pic d'émission centré sur une longueur d'onde inférieure à 440 nm (dans le proche ultra-violet ou même l'ultra-violet), et la roue de coloration selon l'invention présente une zone photoluminescente de conversion vers le bleu.

D'autres montages pour séparer des composantes d'un faisceau en sortie de la roue de coloration peuvent également être mis en oeuvre, sans sortir du cadre de la présente invention.

L'invention trouve des applications avantageuses dans le domaine des projecteurs compacts, et des afficheurs tête haute (ou HUD pour l'anglais « *Head up display »).*

## Revendications

1. Système (200 ; 300 ; 400) de projection d'images, configuré pour mettre en oeuvre une projection en couleurs de type séquentiel, **caractérisé en ce qu'**il comprend :
- un dispositif matriciel d'affichage émissif (210 ; 310 ; 410) ; et
- une roue de coloration (220 ; 320; 420) par conversion de longueur d'onde, comportant au moins deux zones (2201, 2202, 2203 ; 3201, 3202, 3203 ; 4201, 4202) associées chacune à une valeur respective d'une différence de longueur d'onde, entre une longueur d'onde d'entrée sur la roue, λ₁, et une longueur d'onde de sortie de la roue, λ₂, avec λ₂≥ λ₁ ;
et **en ce que** la roue de coloration comporte :
- une zone transparente (4201), associée à une valeur nulle de la différence entre une longueur d'onde d'entrée sur la roue et une longueur d'onde de sortie de la roue ;
- une première zone photoluminescente (4202), configurée pour absorber un faisceau lumineux incident de couleur bleue (430) et émettre en réponse un faisceau lumineux (440) comprenant une composante verte et une composante rouge ;
avec le système (400) qui comprend en outre des moyens de sélection (470), configurés pour bloquer alternativement la composante verte ou la composante rouge, et comprenant au moins un miroir dichroïque (4711, 4712).

2. Système (200 ; 300; 400) de projection d'images selon la revendication 1, **caractérisé en ce que** la roue de coloration (220 ; 320 ; 420) est agencée pour recevoir un faisceau lumineux provenant du dispositif matriciel d'affichage émissif, et **en ce que** le dispositif matriciel d'affichage émissif (210 ; 310 ; 410) est configuré pour émettre un faisceau lumineux avec un pic d'émission centré sur ladite longueur d'onde d'entrée sur la roue, λ₁.

3. Système (200 ; 300 ; 400) de projection d'images selon la revendication 1 ou 2, **caractérisé en ce que** le dispositif matriciel d'affichage émissif (210 ; 310 ; 410) est configuré pour émettre un faisceau lumineux avec un pic d'émission centré sur une longueur d'onde inférieure à 500 nm.

4. Système (200 ; 300 ; 400) de projection d'images selon l'une quelconque des revendications 1 à 3, **caractérisé en ce que** l'une au moins desdites zones (2202, 2203 ; 3202, 3203 ; 4202) comprend un élément photoluminescent comportant des nano-cristaux.

5. Système (200 ; 300 ; 400) de projection d'images selon l'une quelconque des revendications 1 à 4, **caractérisé en ce que** le dispositif matriciel d'affichage émissif (210 ; 310 ; 410) est configuré pour émettre une image monochromatique de couleur bleue.

6. Système (200 ; 300 ; 400) de projection d'images selon l'une quelconque des revendications 1 à 5, **caractérisé en ce que** le dispositif matriciel d'affichage émissif (210 ; 310 ; 410) comporte une matrice de diodes électroluminescentes.

7. Système (200 ; 300 ; 400) de projection d'images selon la revendication 6, **caractérisé en ce que** le dispositif matriciel d'affichage émissif (210 ; 310 ; 410) comporte une matrice de diodes électroluminescentes à base de nitrure de gallium.

8. Système (200 ; 300 ; 400) de projection d'images selon l'une quelconque des revendications 1 à 7, **caractérisé en ce que** les pixels du dispositif matriciel d'affichage émissif (210 ; 310 ; 410) sont répartis selon une matrice carrée ou rectangulaire de côté(s) compris entre 5 mm et 20 mm.
